# EUROPÄISCHE PATENTSCHRIFT

(11) **EP 1 193 087 B1**
(45) Veröffentlichungstag und Bekanntmachung des Hinweises auf die Patenterteilung: **07.06.2006**
(21) Anmeldenummer: 01116886.1
(22) Anmeldetag: 11.07.2001
(51) Int. Cl.: B60G 15/06, B60G 21/055

(54) **Radaufhängung für Kraftfahrzeuge**
Wheel suspension for motor vehicles
Suspension de roue pour véhicules automobiles

(30) Priorität: 28.09.2000 DE 10048121
(43) Veröffentlichungstag der Anmeldung: 03.04.2002
(73) Patentinhaber: Dr.Ing. h.c.F. Porsche Aktiengesellschaft, 70435 Stuttgart (DE)
(72) Erfinder: Becker, Dietmar, 71732 Tamm (DE); Zschocke, Swen, 09569 Olderan-Schönerstadt (DE); Giessel, Brian, 71229 Leonberg (DE); Laub, Michael, 70327 Stuttgart (DE)

(56) Entgegenhaltungen:
- DE-A- 19 923 343
- GB-A- 2 328 190
- US-A- 3 598 385
- MULSANNESCORNER, [Online] XP002247597 Gefunden im Internet: <URL:http://www.mulsannescorner.com/ferrar i333.html> [gefunden am 2003-07-14]
- "Supercars compared" AUTOMOTIVE ENGINEER, MECHANICAL ENGINEERING PUBL.LTD. BURY ST.EDMUNDS, GB, Bd. 17, Nr. 4, 1. August 1992 (1992-08-01), Seiten 26-27, XP000306265 ISSN: 0307-6490

## Beschreibung

Die Erfindung betrifft eine Radaufhängung für Kraftfahrzeuge, insbesondere Personenkraftwagen nach dem Oberbegriff des Patentanspruchs 1.

Eine bekannte Radaufhängung, GB 1,300,028, der eingangs genannten Gattung weist eine quer zur Fahrzeuglängsrichtung ausgerichtete und horizontal angeordnete Federdämpfereinheit - eine Schraubenfeder umgibt einen Stossdämpfer - auf, die an beiden Enden mit Hebeln verbunden ist. Die Hebel sind um eine in Fahrzeuglängsrichtung verlaufende Achse verschwenkbar und mittels Lenker an Radträger gegenüberliegender Räder angeschlossen sind. Die Ausbildung und die Lage der Federdämpfereinheit bzw. der Hebel, auch die ausladende Größe der letzteren, gerade in Fahrzeugquerrichtung, beansprucht nicht nur erheblichen Bauraum, was die Unterbringung von Aggregaten, Gepäckstücken oder dergl. erschwert, sondern beeinträchtigt überdies die freie Gestaltung eines Kraftfahrzeugs im oder benachbarten Bereich einer Radaufhängung.

In der GB 2 328 190 wird eine Radaufhängung behandelt, die je Radseite eine liegende Federdämpfereinheit umfasst und über Hebel und Lenker mit dem zugehörigen Rad zusammenarbeitet. Beide Dämpfereinheiten sind an einer zentralen rautenförmigen Platte angelenkt, und die Hebel sind so ausgeführt, dass sie über in Fahrzeuglängsrichtung ausgerichtete Achsen verschwenkbar sind. Auch dieser Ausführung haftet der Nachteil an, dass der Raum zwischen den gegenüber angeordneten Rädern im wesentlichen allein für Bauteile der Radaufhängung nutzbar ist. Aus der Entgegenhaltung Ferrarissima, 15. September 1994. Automobilia s.r.l., Mailand, Seiten 48-51, insbesondere Seiten 50 und 51 ist ein Fahrzeug (F333 SP) mit einer Radaufhängung bekannt, die eine Federdämpfereinheit umfasst, welche mit einem verschwenkbaren Hebel verbunden ist, der neben der Federdämpfereinheit auch einen Lenker der Radaufhängung sowie einen Lenker für einen Stabilisator aufnimmt. Der Hebel ist schwenkbar am Fahrzeugaufbau angelenkt und die Federdämpfereinheit ist von der Fahrzeugaußenseite zur Fahrzeuginnenseite hin verlaufend liegend gelagert.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Konstruktion je Seite eines Rades aufgrund der Ausbildung der Federdämpfereinheit, des Hebels und der Lenker weitreichende Anforderungen - Radführung, Kräfteverteilung - an eine Radaufhängung der Hochleistungsart erfüllt. Dabei ist der Raumanspruch der Bauteile der Radaufhängung vertretbar gering, so dass sowohl andere Aggregate wie auch Gepäckstücke auf einfach Weise untergebracht werden können. Darüber hinaus weist der Hebel zur Aufnahme der Lenker ein übersichtliches Bauprinzip auf; ebenso seine Lagerung an dem Lagerzapfen, der eine hochfeste Verbindung mit der Aufbaustruktur des Kraftfahrzeugs eingeht. Schließlich eignen sich der Lagerzapfen aus Metall und seine gleichstoffigen Komponenten in ihrer besonderen baulichen Ausprägung vortrefflich zur Anordnung an einer Aufbaustruktur aus einem Verbundwerkstoff - CFK - und damit zur vorteilhaften Lagerung des Hebels an besagter Aufbaustruktur.

In der Zeichnung werden Ausführungsbeispiele der Erfindung gezeigt, die nachstehend näher beschrieben sind.

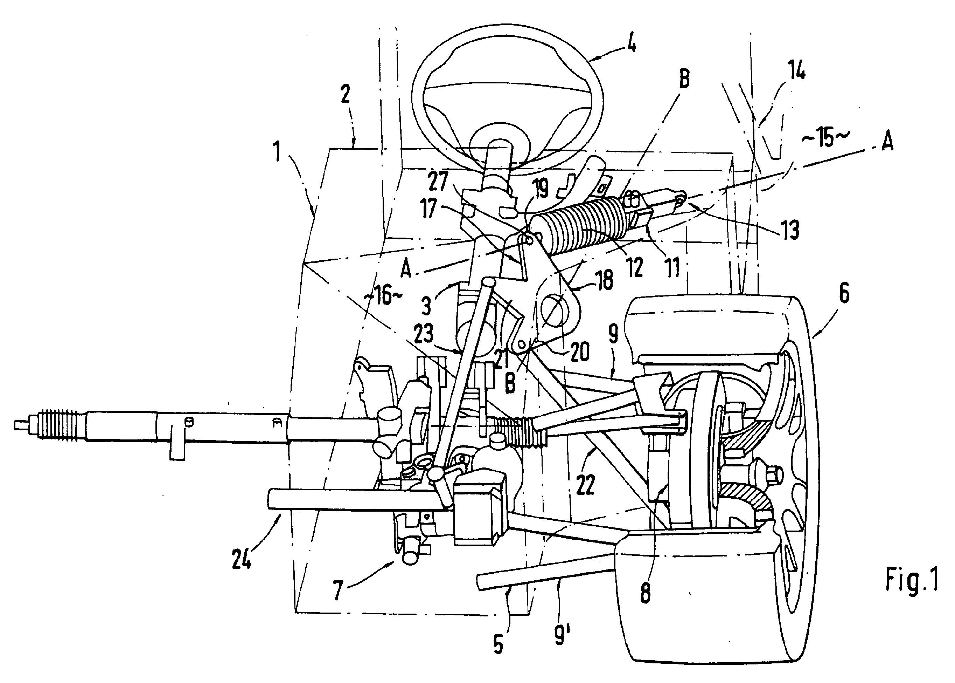

Es zeigen
- Fig. 1: eine Teilschrägansicht auf ein Kraftfahrzeug von vorne mit einer Radaufhängung nach der Erfindung,
- Fig. 2: eine Teilschrägansicht auf ein Kraftfahrzeug von hinten mit einer Radaufhängung nach der Erfindung,
- Fig. 3: eine Schrägansicht einer Einzelheit X der Fig.1 in größerem Maßstab,
- Fig. 4: einen Schnitt nach der Linie IV-IV der Fig. 3 in größerem Maßstab,
- Fig. 5: eine Ansicht entsprechend Fig. 5 mit einer weiteren Ausführungsform.

Ein Kraftfahrzeug 1, das als Personenkraftwagen der Sportwagengattung ausgeführt ist, umfasst eine schematisch dargestellte Aufbaustruktur 2 eine Lenkung 3 mit Lenkrad 4 und eine Radaufhängung 5 für ein Rad 6 einer Vorderachse 7. Das Rad 6 ist mit einem Radträger 8 versehen, der mit oberen und unteren dreieckartigen Radführungsgliedern 9,9' verbunden ist. Darüber hinaus besitzt die Radaufhängung 5 eine Federdämpfereinheit 10, die einen Stossdämpfer 11 und eine Schraubenfeder 12 aufweist; beide sind koaxial zueinander angeordnet, wobei die Schraubenfeder 12 den Stossdämpfer 11 zumindest abschnittsweise umgibt. Die Federdämpfereinheit 10 ist mit einem ersten Ende 13 an der Aufbaustruktur 2 bspw. benachbart einem unteren Bereich einer Windschutz-scheibensäule 14 und oberhalb des Rades 6 angeordnet und verläuft entlang einer Achse A-A, die sich schräg von einer Fahrzeugaußenseite 15 zu einer Fahrzeuginnenseite 16 erstreckt, dergestalt, dass die Federdämpfereinheit 10 eine liegende Position im Kraftfahrzeug 1 einnimmt.

An einem zweiten Ende 17 der Federdämpfereinheit 10 ist ein nahe an das Rad 6 herangeführte Hebel 18 angelenkt, der um eine relativ aufrecht oder entsprechend geneigt im Kraftfahrzeug 1 verlaufende Achse B-B verschwenkbar ist und einen ersten Hebelabschnitt 19, eine zweiten Hebelabschnitt 20 und einen dritten Hebelabschnitt 21 umfasst. Der erste Hebelabschnitt 19 ist an die Federdämpfereinheit 10, der zweite Hebelabschnitt 21 an einen ersten Lenker 22 und der dritte Hebelabschnitt 21 an einen zweiten Lenker 23 angeschlossen. Der erste Lenker 22 wirkt mit dem Radträger 8 und der zweite Lenker mit einem Stabilisator 24 zusammen, der quer im Kraftfahrzeug 1 angeordnet ist.

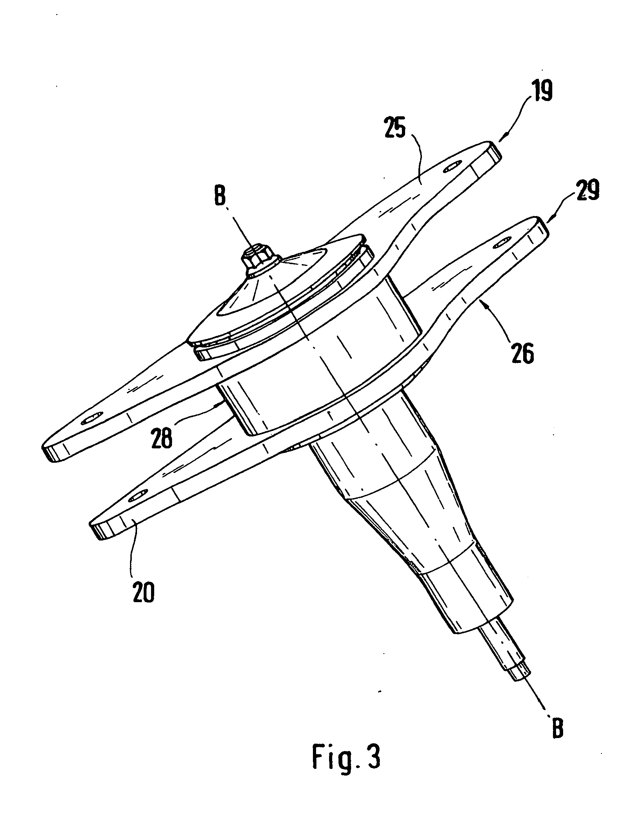

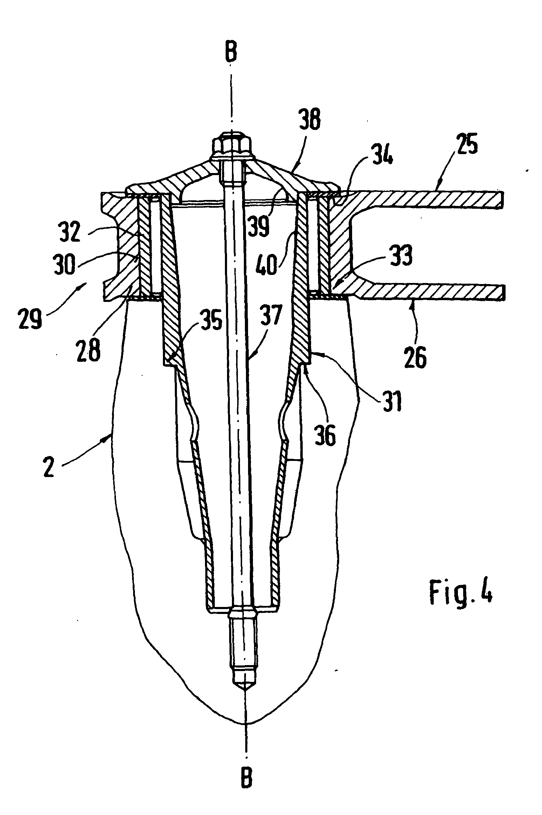

Der Hebel 18 ist im Bereich der Hebelabschnitte 19,20,21 mit beabstandeten Lagerplatten 25,26 versehen, zwischen die die Lenker 22,23 bzw. ein Kolbenstangenende 27 der Federdämpfereinheit 10 eingesetzt sind. Die parallel zueinander ausgerichteten Lagerplatten 25,26 bilden zusammen mit einem kreiszylindrischen Lagerkörper 28 eine Baueinheit 29 - Fig. 3 -, in welchen Lagerkörper 28 eine Lagerbohrung 30 eingearbeitet ist. Der Lagerkörper 28 bzw. die Lagerbohrung 30 umgibt einen Lagerzapfen 31, und der Hebel 18 wird mittels dem Lagerzapfen 31 an der Aufbaustruktur 2 in Lage gehalten - Fig. 4 -. Zwischen Lagerbohrung 30 und Lagerzapfen 31 ist ein Wälzlager 32 z.B. Nadellager angeordnet.

Der Hebel 18 ist zur axialen Fixierung im Bereich des Lagerkörpers 28 bzw. des Wälzlagers 32 zwischen eine Auflageplatte 33 und eine Spannplatte 34 eingespannt. Hierzu liegt der Lagerzapfen 31 einerseits mit einem Stützkragen 35 auf einer Stützschulter 36 der Aufbaustruktur 2 auf und andererseits hält eine Schraubenbolzen 37 den Lagerzapfen 31 und den Hebel 18 unter Vermittlung eines Spanntellers 38 in Lage. Der Spannteller 38 überragt die Spannplatte 34, und er greift mit einem Fixierungskragen 39 in ein Bohrung 40 des Lagerzapfens 31 ein.

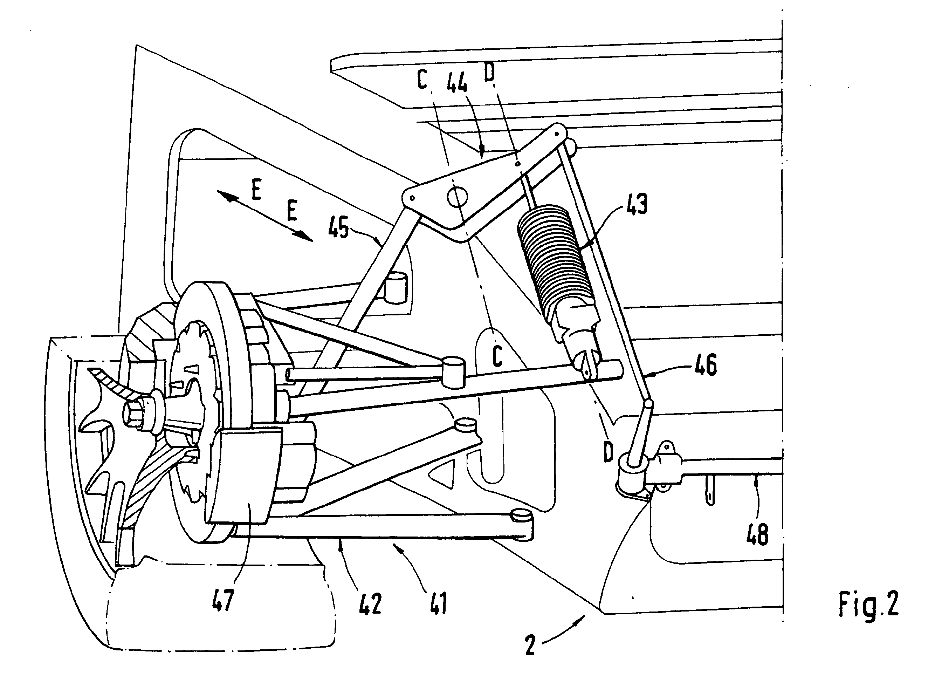

In Fig. 2 ist ein Hinterachse 41 des Kraftfahrzeugs 1 dargestellt, deren Radaufhängung 42 ebenfalls eine Federdämpfereinheit 43 liegender Gattung und einen Hebel 44 besitzt, der um eine Achse C-C verschwenkbar ist. Auch die Achse C-C verläuft im wesentlichen aufrecht im Kraftfahrzeug 1. Hingegen ist die Achse D-D der liegenden Federdämpfereinheit 43 in etwa in Fahrzeuglängsrichtung E-E ausgerichtet. Der Hebel 44 ist mit ersten und zweiten Lenkern 45 und 46 verbunden, die mit einem Radträger 47 bzw. einem Stabilisator 48 zusammenarbeiten. Zur Halterung des Hebels 44 an der Aufbaustruktur 2 dient ein nicht dargestellter Lagerzapfen, der jedoch mit dem weiter oben beschrieben Lagerzapfen 31 vergleichbar ist.

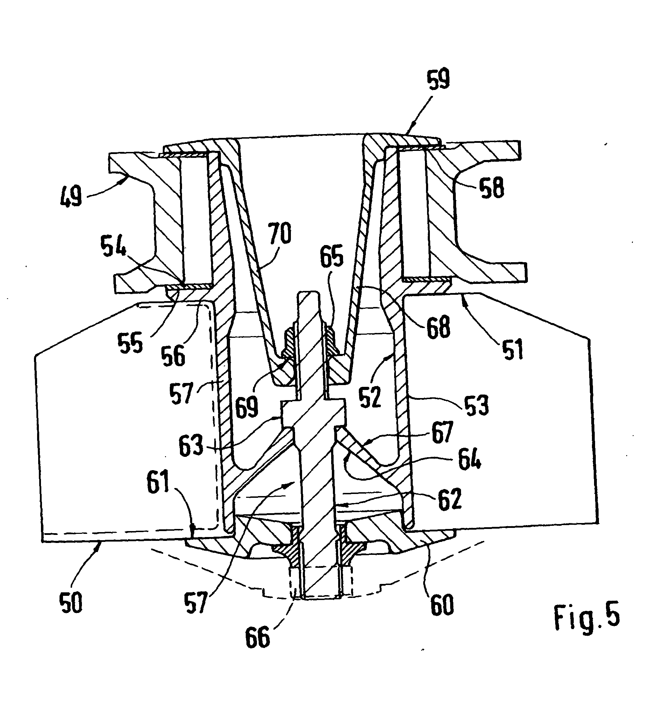

Gemäß Fig. 5 ist ein Hebel 49 an einer Aufbaustruktur 50 gelagert, die aus einem Verbundwerkstoff - CFK-Werkstoff mit hoher Festigkeit und geringem Gewicht - besteht. Der Hebel 49 überragt eine Wand 51 der Aufbaustruktur 50, und ein Lagerzapfen 52 durchdringt eine Durchgangsöffnung 53 der besagten Wand. Der Lagerzapfen 52 liegt mit einem eine Auflageplatte 54 aufnehmenden Tragkragen 55 auf einem ersten Wandabschnitt 56 der Wand 51 auf und ist mit einem Buchsenabschnitt 57 in der Durchgangsöffnung 53 geführt. Darüber hinaus ist der Lagerzapfen 52 und der Hebel 49 mittels einer Halteeinrichtung an der Wand 51 befestigt. Die Halteeinrichtung umfasst eine erste an einer Spannplatte 58 des Hebels 49 anliegende Spannvorrichtung 59 und eine zweite Spannvorrichtung 60, die am einen beabstandet zum ersten Wandabschnitt 56 verlaufenden zweiten Wandabschnitt 62 anliegt. Zwischen den Spannvorrichtungen 59 und 60 ist ein Schraubenbolzen 62 wirksam. Der Schraubenbolzen 61 stützt sich mit einer Zapfenerweiterung 63 an einer Ringstütze 64 des hohlen Lagerzapfens 52 ab, und er ist mit einer ersten Schraubenmutter 65 und einer zweite Schraubenmutter 66 versehen, die auf die erste Spannvorrichtung 59 bzw. die zweite Spannvorrichtung 60 einwirken. Die Ringstütze 64 weist einen Kegelabschnitt 67 auf, der sich in Richtung Zapfenerweiterung 63 verjüngt. Die erste Spannvorrichtung 59 besitzt eine büchsenartige Verlängerung 68, die mit einer Stützfläche 69 für die erste Schraubenmutter 65 versehen ist, welche Stützfläche 69 benachbart der Zapfenerweiterung 63 verläuft. Schließlich umfasst die Verlängerung 68 einen Kegelabschnitt 70, der sich in Richtung Zapfenerweiterung 63 verjüngt.

## Patentansprüche

1. Radaufhängung für Kraftfahrzeuge, welche eine liegende Federdämpfereinheit (10; 43) umfasst, die unter Vermittlung von Hebeln(18) und Lenkern (22) mit Radträgern (8) gegenüberliegender Räder (6) zusammenwirkt, wobei pro Seite eines Rades (6) eine liegende Federdämpfereinheit (10,43) und ein um eine aufrechte oder geneigte Achse (B-B) verschwenkbarer Hebel (18; 44) vorgesehen ist, der mit einem ersten Hebelabschnitt (19) an der Federdämpfereinheit (10; 43) angreift und mit einem zweiten Hebelabschnitt (20) sowie einem ersten Lenker (22) an dem Radträger (8) des Rades (6) und mit einem dritten Hebelabschnitt (21) sowie einem zweiten Lenker (23) an einen Stabilisator (24) angeschlossen ist und die Federdämpfereineheit (10) benachbart eines Rades (6) entlang einer von einer Fahrzeugaußenseite (15) zu einer Fahrzeuginnenseite (16) sich erstreckenden Achse (A-A) verläuft, **dadurch gekennzeichnet, dass** der verschwenkbare Hebel (18) im Bereich der Hebelabschnitte (19, 20, 21) beabstandete Lagerplatten (25, 26) aufweist, zwischen die die Lenker (22, 23) eingesetzt sind, wobei diese Lagerplatten (25, 26) mit einem zylindrischen Lagerkörper (28) eine Baueinheit bilden, der mit einer Lagerbohrung (30) versehen ist und ein Lagerzapfen (31) in der Lagerbohrung (30) angeordnet ist und der Lagerzapfen (31) mit dem verschwenkbaren Hebel (18) an einer Aufbaustruktur (2; 50) in Lage gehalten wird.

2. Radaufhängung nach Anspruch 1, **dadurch gekennzeichnet, dass** zwischen der Lagerbohrung (30) und dem Lagerzapfen (31) ein Wälzlager (32) angeordnet ist

3. Radaufhängung nach Anspruch 2, **dadurch gekennzeichnet, dass** der verschwenkbare Hebel (18) zwischen einer Auflageplatte (33) und eine Spannplatte (34) eingespannt ist und die Platten (33, 34) sich am Wälzlager (32) abstützen.

4. Radaufhängung nach Anspruch 1, **dadurch gekennzeichnet, dass** der Lagerzapfen (31) mit einem Stützkragen (35) auf einer Stützschulter (36) der Aufbaustruktur (2) aufliegt, und ein Schraubenbolzen (37) den Lagerzapfen (31) unter Vermittlung eines Spanntellers (38) gegen die Stützschulter (36) spannt.

5. Radaufhängung nach Anspruch 4, **dadurch gekennzeichnet, dass** der Spannteller (38) die Spannplatte (34) überragt und mit einem Fixierungskragen (39) in eine Bohrung (40) des Lagerzapfens (31) eingreift.

6. Radaufhängung nach Anspruch 1 **dadurch gekennzeichnet, dass** die Federdämpfereinheit (43) in Fahrzeuglängsrichtung (E-E) ausgerichtet ist und diese mit einem Hebel (44) benachbart vom Rad (6) angeordnet ist und der Hebel (44) eine Wand (51) der Aufbaustruktur (50) überragt und ein Lagerzapfen (52) eine Durchgangsbohrung (43) in der Wand (51) durchdringt, wobei der Lagerzapfen (52) mit einem eine Auflageplatte (54) aufnehmenden Tragkragen (55) auf einem ersten Wandabschnitt (56) aufliegt und mit einem Buchsenabschnitt (57) in der Durchgangsöffnung (53) geführt ist und dass der Lagerzapfen (52) und der Hebel (44) mittels einer Halteeinrichtung an der Wand (51) befestigt ist.

7. Radaufhängung nach Anspruch 6, **dadurch gekennzeichnet, dass** die Halteeinrichtung eine erste an der Spannplatte (58) anliegende Spannvorrichtung (59) und eine zweite Spannvorrichtung (60) umfasst, die an einem beabstandet zum ersten Wandabschnitt (56) verlaufenden zweiten Wandabschnitt (61) der Wand (51) anliegt, wobei sich zwischen den Spannvorrichtungen (59,60) ein Schraubenbolzen (62) erstreckt, mit dem die beiden Spannvorrichtungen (59,60) in Lage gehalten werden.

8. Radaufhängung nach Anspruch 7, **dadurch gekennzeichnet, dass** der Schraubenbolzen (62) sich mit einer Zapfenerweiterung (63) an einer Ringstütze (64) des Lagerzapfens (52) abstützt und eine erste Schraubenmutter (65) und eine zweite Schraubenmutter (66) besitzt, welche erste Schraubenmutter (65) an der ersten Spannvorrichtung (59) und welche zweite Schraubenmutter (66) an der zweiten Spannvorrichtung (60) angreift.

9. Radaufhängung nach Anspruch 8, **dadurch gekennzeichnet, dass** die Ringstütze (64) einen Kegelabschnitt (67) aufweist, der sich in Richtung Zapfenerweiterung (63) verjüngt.

10. Radaufhängung nach Anspruch 8 **dadurch gekennzeichnet, dass** die erste Spannvorrichtung (59) eine büchsenartige Verlängerung (68) mit Stützfläche (69) für die erste Schraubenmutter (65) aufweist, die benachbart der Zapfenerweiterung (63) verläuft.

11. Radaufhängung nach Anspruch 10, **dadurch gekennzeichnet, dass** die buchsenartige Verlängerung (68) einen Kegelabschnitt (70) aufweist der sich in Richtung Zapfenerweiterung (63) verjüngt.

## Claims

1. A wheel suspension for motor vehicles, which comprises a horizontal spring-and-damper unit (10; 43) which co-operates with carriers (8) of opposed wheels (6) with the interposition of levers (18) and control arms (22), wherein there are provided *per* side of a wheel (6) one horizontal spring-and-damper unit (10; 43) and one lever (18; 44) which is pivotable about a vertical or inclined axis (**B-B**) and which engages on the spring-and-damper unit (10; 43) with a first lever portion (19) and is attached by a second lever portion (20) and a first control arm (22) to the carrier (8) of the wheel (6) and by a third lever portion (12) and a second control arm (23) to a stabilizer (24), and the spring-and-damper unit (10) extends adjacent to a wheel (6) along an axis (**A-A**) which extends from an outer side (15) of the vehicle to an inner side (16) of the vehicle, **characterized in that** in the region of the lever portions (19, 20, 21) the pivotable lever (18) has spaced bearing plates (25, 26) between which the control arms (22, 23) are inserted, wherein the said bearing plates (25, 26) form - with a cylindrical bearing member (28) - a structural unit which is provided with a bearing bore (30), and a bearing pin (31) is arranged in the bearing bore (30) and the bearing pin (31) with the pivotable lever (18) is held in position on a body structure (2; 50).

2. A wheel suspension according to Claim 1, **characterized in that** a roller bearing (32) is arranged between the bearing bore (30) and the bearing pin (31).

3. A wheel suspension according to Claim 2, **characterized in that** the pivotable lever (18) is clamped between a base plate (33) and a clamping plate (34), and the plates (33, 34) are supported on the roller bearing (32).

4. A wheel suspension according to Claim 1, **characterized in that** the bearing pin (31) rests with a support collar (35) on a support shoulder (36) of the body structure (2), and a screw bolt (37) clamps the bearing pin (31) against the support shoulder (36) with the interposition of a clamping disc (38).

5. A wheel suspension according to Claim 4, **characterized in that** the clamping disc (38) projects beyond the clamping plate (34) and engages - with a fixing collar (39) - in a bore (40) in the bearing pin (31).

6. A wheel suspension according to Claim 1, **characterized in that** the spring-and-damper unit (43) is orientated in the longitudinal direction (**E-E**) of the vehicle and it is arranged with a lever (44) adjacent to the wheel (6), and the lever (44) projects beyond a wall (51) of the body structure (50), and a bearing pin (52) passes through a through-bore (43) in the wall (51), wherein the bearing pin (52) rests - with a support collar (55) which receives a base plate (54) - on a first wall portion (56) and is guided by a bush portion (57) in the through-opening (53), and the bearing pin (52) and the lever (44) are fastened to the wall (51) by means of a retaining device.

7. A wheel suspension according to Claim 6, **characterized in that** the retaining device comprises a first clamping device (59) resting against the clamping plate (58) and a second clamping device (60) which rests against a second portion (61) of the wall (51) which extends at a distance from the first wall portion (56), wherein a screw bolt (62), by which the two clamping devices (59, 60) are held in position, extends between the clamping devices (59, 60).

8. A wheel suspension according to Claim 7, **characterized in that** the screw bolt (62) is supported by a pin enlargement (63) on an annular support (64) on the bearing pin (52) and has a first screw nut (65) and a second screw nut (66), which first screw nut (65) engages on the first clamping device (59) and which second screw nut (66) engages on the second clamping device (60).

9. A wheel suspension according to Claim 8, **characterized in that** the annular support (64) has a tapered portion (67) which tapers inwardly in the direction of the pin enlargement (63).

10. A wheel suspension according to Claim 8, **characterized in that** the first clamping device (59) has a bush-like extension (68) with a support face (69) for the first screw nut (65) which extends adjacent to the pin enlargement (63).

11. A wheel suspension according to Claim 10, **characterized in that** the bush-like extension (68) has a tapered portion (70) which tapers inwardly in the direction of the pin enlargement (63).

## Revendications

1. Suspension de roue pour véhicules automobiles, qui comprend une unité d'amortisseur élastique (10 ; 43) horizontale, laquelle coopère par l'intérieur de leviers (18) et de bras oscillants (22) avec des supports de roue (8) de roues opposées (6), une unité d'amortisseur élastique (10 ; 43) horizontale et un levier (18 ; 44) pouvant basculer autour d'un axe (B-B) vertical ou incliné étant prévus par coté d'une roue (6), lequel levier s'applique avec une première partie de levier (19) sur l'unité d'amortisseur élastique (10 ; 43) et est raccordé avec une seconde partie de levier (20) et un premier bras oscillant (22) au support de roue (8) de la roue (6) et avec une troisième partie de levier (21) et un second bras oscillant (23) à un stabilisateur (24) et l'unité d'amortisseur élastique (10) est disposée à proximité d'une roue (6) le long d'un axe (A-A) s'étendant depuis un coté extérieur du véhicule (15) vers un coté intérieur du véhicule (16), **caractérisée en ce que** le levier (18) basculant présente dans la zone des parties de levier (19, 20, 21) des plaques de palier (25, 26) espacées, entre lesquelles les bras oscillants (22, 23) sont insérés, ces plaques de palier (25, 26) formant avec un corps de palier (28) cylindrique un module qui est doté d'un alésage de palier (30) et un tourillon (31) est disposé dans l'alésage de palier (30) et le tourillon (31) avec le levier (18) basculant est maintenu en position sur une structure de carrosserie (2 ; 50).

2. Suspension de roue selon la revendication 1, **caractérisée en ce qu'**un palier de roulement (32) est disposé entre l'alésage de palier (30) et le tourillon (31).

3. Suspension de roue selon la revendication 2, **caractérisée en ce que** le levier (18) basculant est serré entre une plaque d'appui (33) et une plaque de serrage (34) et les plaques (33, 34) s'appuient sur le palier roulant (32).

4. Suspension de roue selon la revendication 1, **caractérisée en ce que** le tourillon (31) repose avec une collerette de support (35) sur un épaulement d'appui (36) de la structure de carrosserie (2) et un boulon fileté (37) serre le tourillon (31) par l'intermédiaire d'un plateau de serrage (38) contre l'épaulement d'appui (36).

5. Suspension de roue selon la revendication 4, **caractérisée en ce que** le plateau de serrage (38) dépasse de la plaque de serrage (34) et s'engage avec une collerette de fixation (39) dans un alésage (40) du tourillon (31) .

6. Suspension de roue selon la revendication 1, **caractérisée en ce que** l'unité amortisseur à ressort (43) est orientée dans le sens longitudinal du véhicule (E-E) et celle-ci est disposée avec un levier (44) à proximité de la roue (6) et le levier (44) dépasse d'une paroi (51) de la structure de carrosserie (50) et un tourillon (52) traverse un alésage de passage (43) dans la paroi (51), le tourillon (52) reposant avec une collerette support (55) recevant une plaque d'appui (24) sur une première partie de paroi (56) et étant guidé avec une partie de douille (57) dans l'ouverture de passage (53) et **en ce que** le tourillon (52) et le levier (44) sont fixés au moyen d'un dispositif de retenue sur la paroi (51).

7. Suspension de roue selon la revendication 6, **caractérisée en ce que** le dispositif de retenue comprend un premier dispositif de serrage (59) s'appuyant sur la plaque de serrage (58) et un second dispositif de serrage (60), qui s'appuie sur une seconde partie de paroi (61), agencée à distance de la première partie de paroi (56), de la paroi (51), un boulon fileté (62) par lequel les deux dispositifs de serrage (59, 60) sont maintenus en position, s'étendant entre les dispositifs de serrage (59, 60).

8. Suspension de roue selon la revendication 7, **caractérisée en ce que** le boulon fileté (62) s'appuie avec un élargissement (63) du boulon sur un support annulaire (64) du tourillon (52) et est doté d'un premier écrou de vis (65) et d'un second écrou de vis (66), le premier écrou de vis (65) agissant sur le premier dispositif de serrage (59) et le second écrou de vis (66) agissant sur le second dispositif de serrage (60).

9. Suspension de roue selon la revendication 8, **caractérisée en ce que** le support annulaire (64) présente une partie conique (67), qui se rétrécit en direction de l'élargissement (63) du boulon.

10. Suspension de roue selon la revendication 8, **caractérisée en ce que** le premier dispositif de serrage (59) présente un prolongement (68) en forme de douille doté d'une surface d'appui (69) pour le premier écrou de vis (65), qui s'étend au voisinage de l'élargissement (63) du boulon.

11. Suspension de roue selon la revendication 10, **caractérisée en ce que** le prolongement (68) en forme de douille présente une partie conique (70) qui se rétrécit en direction de l'élargissement (63) du boulon.
